(19) **Europäisches Patentamt / European Patent Office / Office européen des brevets**

(11) **EP 3 251 260 B1**

(12) # EUROPEAN PATENT SPECIFICATION

(45) Date of publication and mention
of the grant of the patent:
**30.09.2020 Bulletin 2020/40**

(51) Int Cl.:
**H04L 1/18** *(2006.01)*          **H04L 5/00** *(2006.01)*

(21) Application number: **16743721.9**

(22) Date of filing: **29.01.2016**

(86) International application number:
**PCT/KR2016/000983**

(87) International publication number:
**WO 2016/122243 (04.08.2016 Gazette 2016/31)**

(54) **HARQ-ACK INFORMATION FEEDBACK METHOD AND APPARATUS**

HARQ-ACK-INFORMATIONSRÜCKMELDUNGSVERFAHREN UND VORRICHTUNG

PROCÉDÉ ET APPAREIL DE RENVOI D'INFORMATIONS D'ACCUSÉ DE RÉCEPTION (ACK) DE DEMANDE DE RÉPÉTITION AUTOMATIQUE HYBRIDE (HARQ)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.01.2015 CN 201510047578**
**10.04.2015 CN 201510170269**

(43) Date of publication of application:
**06.12.2017 Bulletin 2017/49**

(73) Proprietor: **Samsung Electronics Co., Ltd.**
**Suwon-si, Gyeonggi-do 16677 (KR)**

(72) Inventors:
• **ZHANG, Shichang**
**Gyeonggi-do 16677 (KR)**
• **LI, Yingyang**
**Gyeonggi-do 16677 (KR)**

• **FU, Jingxing**
**Gyeonggi-do 16677 (KR)**
• **WANG, Yi**
**Gyeonggi-do 16677 (KR)**
• **SUN, Chengjun**
**Gyeonggi-do 16677 (KR)**
• **XU, Lixiang**
**Gyeonggi-do 16677 (KR)**

(74) Representative: **Gulde & Partner**
**Patent- und Rechtsanwaltskanzlei mbB**
**Wallstraße 58/59**
**10179 Berlin (DE)**

(56) References cited:
EP-A2- 2 451 111          US-A1- 2012 039 280
US-A1- 2012 099 491          US-A1- 2013 114 474
US-A1- 2013 114 575          US-A1- 2014 016 522
US-A1- 2014 105 076

**Description**

**[Technical Field]**

The present disclosure relates to radio communication techniques. More particularly, the present disclosure relates to a hybrid automatic repeat request-acknowledgement (HARQ-ACK) information feedback method and apparatus.

**[Background Art]**

Long-term evolution (LTE) system supports two duplex modes including frequency division duplex (FDD) and time division duplex (TDD).

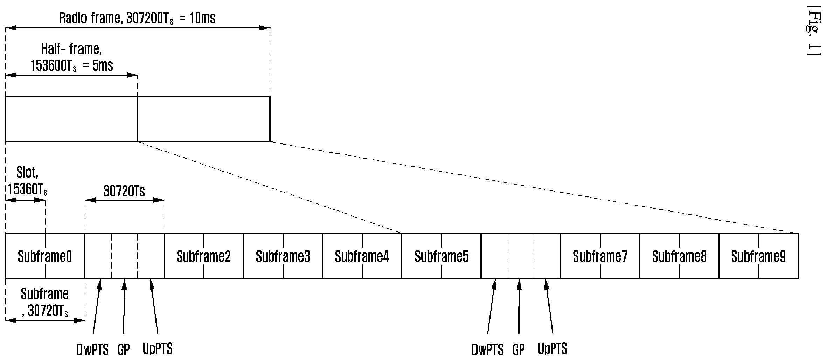

FIG. 1 shows a frame structure of a TDD system according to the related art.

Referring to FIG. 1, each radio frame is of 10 ms length and is divided into two 5 ms half-frames. Each half-frame includes eight 0.5 ms slots and three special fields, i.e., downlink pilot slot (DwPTS), guard period (GP) and uplink pilot slot (UpPTS). The total length of the three special fields is 1 ms. The TDD system supports 7 kinds of uplink-downlink configurations, as shown in Table 1. Herein, D denotes a downlink subframe, U denotes an uplink subframe, and S denotes a special subframe including the above three special fields.

[Table 1]

| Uplink-downlink configurations of LTE TDD | | | | | | | | | | | |
|---|---|---|---|---|---|---|---|---|---|---|---|
| Configuration index | Switching point periodicity | Subframe index | | | | | | | | | |
| | | 0 | 1 | 2 | 3 | 4 | 5 | 6 | 7 | 8 | 9 |
| 0 | 5ms | D | S | U | U | U | D | S | U | U | U |
| 1 | 5ms | D | S | U | U | D | D | S | U | U | D |
| 2 | 5ms | D | S | U | D | D | D | S | U | D | D |
| 3 | 10ms | D | S | U | U | U | D | D | D | D | D |
| 4 | 10ms | D | S | U | U | D | D | D | D | D | D |
| 5 | 10ms | D | S | U | D | D | D | D | D | D | D |
| 6 | 10ms | D | S | U | U | U | D | S | U | U | D |

In the LTE-advanced (LTE-A) system, a wider working bandwidth is obtained through combining multiple component carriers (CCs) via a carrier aggregation (CA) technique, and therefore data transmission rate may be further increased. Each CC corresponds to one cell. According to current LTE standards (e.g., Rel-12), a UE may work on at most 5 CCs at the same time, wherein one of the 5 CCs is a primary cell (Pcell), and other CCs are secondary cells (Scells).

In downlink communication of the LTE-A system, a hybrid automatic repeat request (HARQ) technique is utilized to ensure reliability of downlink data receipt. The user equipment (UE) receives a downlink grant (DL-GRANT), wherein the DL-GRANT is carried by a physical downlink control channel (PDCCH) or an enhanced PDCCH (EPDCCH). For each transmission block (TB) received via physical downlink shared channel (PDSCH), or received PDCCH indicating release of semi-persistent scheduling (hereinafter the above two are referred to as downlink HARQ transmission), the UE needs to feed back an acknowledgement (ACK) (correct receipt) bit or negative ACK (NACK) (incorrect receipt or lost) bit to the base station via corresponding uplink subframe, hereinafter referred to as a HARQ-ACK bit. If the eNB receives the NACK bit, the eNB re-transmits the TB corresponding to the NACK or the PDCCH indicating the release of the SPS. According to different HARQ-ACK mechanisms, the LTE-A standard defines corresponding methods for determining the number of HARQ-ACK bits to be fed back and values of the HARQ-ACK bits.

In an FDD system, if the UE feeds back a HARQ-ACK bit in an uplink subframe n via a physical uplink shared channel (PUSCH), the number of HARQ-ACK bits to be fed back is determined according to the number of carriers configured for the UE and a transmission mode (e.g., transmission mode of one TB or transmission mode of two TBs) of each carrier. For each carrier configured for the UE, if the transmission mode is one TB, the carrier corresponds to one HARQ-ACK bit. If the transmission mode is two TBs, the carrier corresponds to two HARQ-ACK bits. The bits are arranged according to an ascending order of the indexes of the carriers, to form a HARQ-ACK bit sequence that the UE finally feeds back in an uplink subframe n. The HARQ-ACK bit sequence refers to that before channel coding, and the same applies hereinafter.

In the TDD system, the number of HARQ-ACK bits to be fed back by the UE in an uplink (UL) subframe n is determined by a HARQ-ACK time-frequency bundling window, a UL downlink assignment index (UL DAI) carried in a UL grant (UG) of subframe n, a number of carriers configured for the UE, and the transmission mode configured for each carrier, in which the HARQ-ACK time-frequency bundling window is determined by a TDD uplink-downlink configuration corresponding to a HARQ-ACK timing relationship followed by the HARQ-ACK feed back of the UE, denoting all downlink subframes on one carrier whose HARQ-ACK is to be fed back in a subframe n. The indexes of the downlink subframes are denoted by $n-k_i$, $k_i \in K$, wherein the dimension M of the set K is referred to as the size of the time-frequency bundling window. The set K determined by the present LTE standard with respect to the HARQ timing relationships corresponding to different TDD uplink-downlink configurations is as shown in Table 2. For facilitating the description, the subframe set K corresponding to the time-frequency bundling window determined by the HARQ timing relationship of FDD is defined as {4}, M=1 at this time.

In the following, UL DAI denotes a maximum number of downlink subframes that actually have downlink HARQ transmission in the time-frequency bundling window configured for each carrier of the UE. For each carrier configured for the UE, the number of downlink subframes that need to feed back HARQ-ACK in a subframe n is Bc=min (Mc, UL DAI), wherein min denotes an operation of obtaining a minimum value, and Mc denotes the size of the time-frequency bundling window corresponding to the carrier c. If the transmission mode of the current carrier is one TB, the number of HARQ-ACK bits corresponding to this carrier is Oc=Bc, and each subframe corresponds to one HARQ-ACK bit. If the transmission mode of the current carrier is two TBs, the number of HARQ-ACK bits corresponding to the carrier is Oc=2*Bc, and each downlink subframe corresponds to two HARQ-ACK bits.

[Table 2]

| Set K: $\{k_0, k_1 ... k_{M-1}\}$ determined by different HARQ timing relationships | | | | | | | | | | |
|---|---|---|---|---|---|---|---|---|---|---|
| TDD uplink-downlink configuration | Subframe index | | | | | | | | | |
| | 0 | 1 | 2 | 3 | 4 | 5 | 6 | 7 | 8 | 9 |
| 0 | - | - | 6 | - | 4 | - | - | 6 | - | 4 |
| 1 | - | - | 7, 6 | 4 | - | - | - | 7, 6 | 4 | - |
| 2 | - | - | 8, 7, 4, 6 | - | - | - | - | 8, 7, 4, 6 | - | - |
| 3 | - | - | 7, 6, 11 | 6, 5 | 5, 4 | - | - | - | - | - |
| 4 | - | - | 12, 8, 7, 11 | 6, 5, 4, 11 | - | - | - | - | - | - |
| 5 | - | - | 13, 12, 9, 8, 7, 5, 4, 11, 6 | - | - | - | - | - | -- | - |
| 6 | - | - | 7 | 7 | 5 | - | - | 7 | 7 | - |

In the TDD system, the HARQ-ACK bit sequence that needs to be fed back by the UE is determined by a sum $O_{UE}$ of HARQ-ACK bits corresponding to all carriers. If $O_{UE}$ is not larger than 20, the HARQ-ACK bit of each carrier is arranged according to an ascending order of the carrier indexes to form the HARQ-ACK bit sequence to be fed back by the UE. Otherwise, if $O_{UE}$ is larger than 20, for all carriers whose transmission mode is two TBs, an "OR" calculation (i.e., spatial bundling) is performed on the two HARQ-ACK bits corresponding to two TBs of each subframe, to obtain one HARQ-ACK bit. For the carriers whose transmission mode is one TB, the HARQ-ACK bit corresponding to each subframe is unchanged. After the above processing, the HARQ-ACK bit of each carrier of the UE is arranged according to the ascending order of the carrier indexes to generate the HARQ-ACK bit sequence to be fed back by the UE.

It can be seen from the above description that, in the HARQ-ACK feedback mechanism defined by existing standards, the HARQ-ACK bit sequence finally fed back by the UE may include a HARQ-ACK bit corresponding to a downlink subframe which has no downlink HARQ transmission. For example, in the FDD system, whether or not there is downlink HARQ-ACK transmission on the carrier, the HARQ-ACK bit sequence fed back by the UE always includes a HARQ-ACK bit corresponding to that carrier. In the TDD system, however, the UE determines the number of downlink subframes having downlink HARQ transmission on each carrier, but the value of Bc may be larger than the number of downlink subframes actually having downlink HARQ transmission in the time-frequency bundling window corresponding to the carrier. According to the current standards, the UE supports at most 5 carriers. Therefore, the existence of the nonsense HARQ-ACK bit does not have much impact to the system performance.

However, in order to further increase the downlink peak rate of the UE, it is well recognized by third generation partnership project (3GPP) member companies that the maximum number of carriers supported by the UE should be increased. According to the conclusion of the 3GPP radio access network (RAN) #66 meeting, the number of carriers supported by the UE will be increased to 32, wherein carriers on the unlicensed band may be included. With the increase of the number of downlink carriers supported by the UE, the absolute value of non-scheduled downlink subframes may increase accordingly. Therefore, if the current HARQ-ACK feedback mechanism is still utilized, the efficiency for feeding back information will decrease and finally affect the downlink peak rate of the UE, which contradicts the initial objective of increasing the number of carriers.

It can be seen from the above that, in order to effectively support downlink CA with at most 32 carriers, the existing HARQ-ACK feedback mechanism affects the downlink peak rate of the UE due to its low feedback efficiency. There is no appropriate solution at present.

EP 2451111 A2 discloses a method of a UE for transmitting ACK information to a base station in a TDD communication scheme. Therein, an ACK bit is generated for each transport block, TB, of each a plurality of subframes, TTI, and each cell carrier configured for the UE. US 2013/114575 A1 discloses another method for transmitting HARQ-ACK feedback by a UE to a base station in downlink carrier aggregation of the UE.

The above information is presented as background information only, to assist with an understanding of the present disclosure. No determination has been made, and no assertion is made, as to whether any of the above might be applicable as prior art with regard to the present disclosure.

**[Disclosure of Invention]**

**[Technical Problem]**

In order to effectively support downlink CA with at most 32 carriers, the existing HARQ-ACK feedback mechanism affects the downlink peak rate of the UE due to its low feedback efficiency.

**[Solution to Problem]**

Aspects of the present disclosure are to address at least the above-mentioned problems and/or disadvantages and to provide at least the advantages described below. Accordingly, an aspect of the present disclosure is to provide a hybrid automatic repeat request-acknowledgement (HARQ-ACK) information feedback method and apparatus.

In accordance with an aspect of the present disclosure, a HARQ-ACK information feedback methods of a UE and of a base station, both applicable for a downlink carrier aggregation (CA) system, are provided in accordance with the respective appended claims. According to a preferred embodiment, the HARQ-ACK information feedback method includes, in a time-frequency bundling window corresponding to an uplink subframe in which HARQ-ACK is fed back, receiving a downlink grant (DL-GRANT) scheduling downlink HARQ transmission, obtaining a downlink (DL) downlink assignment index (DL DAI) in a DL-GRANT, and determining a mapping value of each DL DAI, and mapping a HARQ-ACK bit of each HARQ feedback unit to a corresponding bit of a feedback bit sequence according to the mapping value of the corresponding DL DAI.

In a preferred embodiment of the present disclosure, the time-frequency bundling window comprises all downlink subframes whose HARQ-ACK is fed back in the uplink subframe, and all of the downlink subframes are arranged according to a predefined rule.

In a preferred embodiment of the present disclosure, the DL DAI in the DL-GRANT is one of two types, wherein type 1 is a time-domain DL DAI, and type 2 is a combined DAI. The mapping value of the DL DAI of type 1 indicates the number of downlink subframes scheduled by the DL-GRANT containing the DL DAI of type 1 from the first downlink subframe in the time-frequency bundling window to the downlink subframe where the DL-GRANT corresponding to the DL DAI is located. The mapping value of the DL DAI of type 2 indicates the number of HARQ feedback units scheduled by the DL-GRANT containing DL DAI of type 2 from the first downlink subframe in the time-frequency bundling window to the downlink subframe wherein the DL-GRANT corresponding to the DL DAI is located.

In a preferred embodiment of the present disclosure, if the length of the DL DAI is 3 bits, a mapping relationship between the DL DAI and the mapping value of the DL DAI is as shown in Table 3.

[Table 3]

| DL DAI | Mapping value of DL DAI |
|--------|--------------------------|
| 0, 0, 0 | 1 or 9 or 17 or... |
| 0, 0, 1 | 2 or 10 or 18 or... |
| 0, 1, 0 | 3 or 11 or 19 or... |
| 0, 1, 1 | 4 or 12 or 20 or... |
| 1, 0, 0 | 5 or 13 or 21 or... |

(continued)

| DL DAI | Mapping value of DL DAI |
|--------|------------------------|
| 1, 0, 1 | 6 or 14 or 22 or... |
| 1, 1, 0 | 7 or 15 or 23 or... |
| 1, 1, 1 | 0 or 8 or 16 or... |

In a preferred embodiment of the present disclosure, an index $m_{kc}$ of each downlink subframe in the time-frequency bundling window is determined by Equation (1) below:

$$\text{let } m_{k_c} = 0 \qquad\qquad \text{Equation (1)}$$

let i = $k_{max}$

let j=0

while i≥$k_c$

while j<Nc

if subframe with index n-i on carrier j is a downlink subframe, and the HARQ-ACK bit of this subframe is fed back in uplink subframe n

$$m_{k_c} = m_{k_c} + 1$$

else

$$m_{k_c} = m_{k_c}$$

end if

j=j+1;

end while

i=i-1;

end while

wherein c denotes an index of the carrier where the downlink subframe is located in the time-frequency bundling window, and 0≤c< Nc. Nc denotes a total number of downlink component carriers (CCs) whose HARQ-ACK is fed back in the uplink subframe. The index of the downlink subframe in the time-frequency bundling window is n-$k_c$, wherein n denotes an index of the uplink subframe, and $k_c \in Kc$. K is determined according to a HARQ timing relationship adopted by the UE when feeding back HARQ-ACK of downlink subframes on carrier c in the uplink subframe n, and $k_{max}$ denotes a maximum value in set K, set K being a union of sets K0, K1,...$K_{Nc}$.

In a preferred embodiment of the present disclosure, the HARQ feedback unit is an entity corresponding to each HARQ-ACK bit.

In a preferred embodiment of the present disclosure, the HARQ feedback unit is a transmission block (TB) or a downlink subframe.

In a preferred embodiment of the present disclosure, the mapping of the HARQ-ACK bit of each HARQ feedback unit to the corresponding bit of the feedback bit sequence according to the corresponding mapping value of the DL DAI includes, if the HARQ feedback unit is TBs, and if the downlink HARQ transmission mode in downlink subframe $m_{kc}$ is one TB, the HARQ-ACK bit of the TB corresponds to $O_{DAI_{k_c}} + \triangle$ in the feedback bit sequence $O_0 O_1,...,O_{O_{ACK}-1}$. If the transmission mode of the downlink HARQ transmission in subframe $m_{kc}$ is two TBs, the HARQ-ACK bit of a first

TB corresponds to $O_{DAI_{k_c}-1}+\triangle$ in the feedback bit sequence $O_0 O_1,...,O_{O_{ACK}-1}$, and the HARQ-ACK bit of a second TB corresponds to $O_{DAI_{k_c}}+\triangle$ in the feedback bit sequence $O_0 O_1,...,O_{O_{ACK}-1}$. If the feedback unit is downlink subframes, the HARQ-ACK bit of downlink subframe $m_{k_c}$ which has downlink HARQ transmission within the time-frequency bundling window corresponds to $O_{DAI_{k_c}}+\triangle$ in the feedback bit sequence $O_0 O_1,...,O_{O_{ACK}-1}$. In each case, c denotes an index of the carrier where the downlink subframe is located in the time-frequency bundling window, and $0 \leq c < Nc$. Nc denotes a total number of downlink CCs whose HARQ-ACK is fed back in the uplink subframe. The index of the downlink subframe in the time-frequency bundling window is $n-k_c$, wherein n denotes an index of the uplink subframe, $k_c \in Kc$. K is determined according to a HARQ timing relationship adopted by the UE when feeding back HARQ-ACK of downlink subframes on carrier c in the uplink subframe n. $O_{ACK}$ denotes a total length of the feedback bit sequence, $DAI_{k_c}$ denotes the mapping value of DL DAI of downlink subframe n-k on carrier c, and the value of $\triangle$ is determined by a position of the HARQ-ACK bit of a downlink subframe which is on a carrier not supporting the DL-GRANT containing the DL DAI and whose HARQ-ACK is fed back in the uplink subframe in the feedback bit sequence and number of the HARQ-ACK bit.

In a preferred embodiment of the present disclosure, the HARQ-ACK bit of the TB of the downlink subframe or the HARQ-ACK bit of the downlink subframe which is scheduled by the DL-GRANT containing the DL DAI of type 1 and whose HARQ-ACK is fed back in the uplink subframe n is mapped to a predefined position in the feedback bit sequence.

In a preferred embodiment of the present disclosure, the mapping to the predefined position in the feedback bit sequence comprises mapping to a start point of the feedback bit sequence, mapping to a position behind a HARQ-ACK bit corresponding to semi-persistent scheduling (SPS) transmission, mapping to the end of the HARQ-ACK bit sequence corresponding to the HARQ feedback unit in the time-frequency bundling window, or mapping to a position in front of a HARQ-ACK bit corresponding to the SPS transmission.

In a preferred embodiment of the present disclosure, the method further includes, if there is SPS downlink transmission in the time-frequency bundling window, mapping the HARQ-ACK bit corresponding to the SPS transmission to a predefined position in the feedback bit sequence according to an index of the downlink subframe where the SPS transmission is located in the time-frequency bundling window.

In a preferred embodiment of the present disclosure, the mapping to the predefined position of the feedback bit sequence includes, according to an index of the downlink subframe where the SPS transmission is located in the time-frequency bundling window, mapping the HARQ-ACK bit corresponding to the SPS transmission to a start point of the feedback bit sequence according to an ascending order of indexes or mapping the HARQ-ACK bit of the SPS transmission to a position in front of the HARQ-ACK bit corresponding to downlink HARQ transmission scheduled by the DL-GRANT containing DL DAI of type 1, or according to the index of the downlink subframe where the SPS transmission is located in the time-frequency bundling window, mapping the HARQ-ACK bit corresponding to the SPS transmission to the end of the feedback bit sequence according to a descending order of indexes or mapping the HARQ-ACK bit corresponding to the SPS transmission to a position in front of the HARQ-ACK bit corresponding to the downlink HARQ transmission scheduled by the DL-GRANT containing DL DAI of type 1. If there is a HARQ-ACK bit corresponding to downlink HARQ transmission of another type in front of the HARQ-ACK bit corresponding to the downlink HARQ transmission scheduled by the DL-GRANT containing DL DAI of type 2, the value of $\triangle$ equals the total number of HARQ-ACK bits corresponding to the downlink HARQ transmission of the another type. Otherwise, the value of $\triangle$ is 0.

In a preferred embodiment of the present disclosure, the method further includes in the feedback bit sequence, if a bit does not correspond to any HARQ feedback unit, configuring the bit as a negative ACK (NACK).

In a preferred embodiment of the present disclosure, the value of $O_{ACK}$ is dynamically indicated by an enhanced node B (eNB) via higher physical layer signaling or indicated semi-statically or statically by the eNB via higher layer signaling, or determined by the UE according to actually received HARQ feedback unit in the time-frequency bundling window, wherein the UE determines a format of a feedback channel according to the number of HARQ feedback units actually received by the UE in the time-frequency bundling window and other information that needs to be fed back, and obtains the $O_{ACK}$ by subtracting the number of bits occupied by the other information to be fed back from a capacity of the feedback channel.

In a preferred embodiment of the present disclosure, the dynamic indicating via physical layer signaling includes indicating via UL DAI, or indicating by adding an additional bit in the DL-GRANT or using a redundant bit in the DL-GRANT, wherein in the DL-GRANT transmitted in each subframe, the bit indicates the total number of HARQ-ACK feedback units scheduled on the carrier adopting the DL-GRANT containing the DL DAI of the same type in the subframe.

In accordance with another aspect of the present disclosure, a user equipment and a base station configured for feeding back HARQ-ACK information are provided in accordance with the respective appended claims. In preferred embodiments, the UE includes a receiving module adapted to receive, in a time-frequency bundling window corresponding to an uplink subframe used for feeding back HARQ-ACK information, DL-GRANT scheduling downlink HARQ transmission, obtain a DL DAI in the DL-GRANT, and determine a mapping value of each DL DAI. The UE further includes a feedback module adapted to map a HARQ-ACK bit of each HARQ feedback unit to a corresponding bit in a feedback bit sequence according to a mapping value of the corresponding DL DAI.

In a HARQ-ACK information feedback method according to preferred embodiments of the present disclosure, the UE first determines the HARQ feedback unit, and then determines a time-frequency bundling window corresponding to an uplink subframe used for feeding back HARQ-ACK, receives DL-GRANT scheduling downlink HARQ transmission in the time-frequency bundling window, obtains DL DAI from the DL-GRANT, and maps the DL DAI to a certain integer according to a predefined mapping rule. According to this integer, the UE is able to determine the number of feedback units having been scheduled from the first downlink subframe in the time-frequency bundling window to the current downlink subframe. The UE further determines the total number of HARQ-ACK bits to be fed back in the time-frequency bundling window through receiving physical layer signaling or higher layer signaling from the eNB, and maps the HARQ-ACK bit of each feedback unit to a corresponding bit in the feedback bit sequence according to the mapping value of the corresponding DL DAI. According to aspects of the present disclosure, invalid HARQ-ACK bits may be effectively removed, the efficiency for feeding back the HARQ-ACK may be increased and thus, a downlink peak rate of a UE is ensured.

Other aspects, advantages, and salient features of the disclosure will become apparent to those skilled in the art from the following detailed description, which, when taken in conjunction with the annexed drawings, discloses various embodiments of the present disclosure.

## [Advantageous Effects of Invention]

In order to effectively support downlink CA with at most 32 carriers, the present disclosure provides a hybrid automatic repeat request-acknowledgement (HARQ-ACK) information feedback method and apparatus.

## [Brief Description of Drawings]

The above and other aspects, features, and advantages of certain embodiments of the present disclosure will be more apparent from the following description taken in conjunction with the accompanying drawings, in which:

FIG. 1 is a schematic diagram illustrating a time division duplex (TDD) system frame structure according to the related art;
FIG. 2 is a flowchart illustrating a hybrid automatic repeat request-acknowledgement (HARQ-ACK) information feedback method according to an embodiment of the present disclosure;
FIG. 3 is a schematic diagram illustrating a time-frequency bundling window according to an embodiment of the present disclosure;
FIG. 4 is a schematic diagram illustrating a time-frequency bundling window in a case where downlink component carriers (CCs) of the user equipment (UE) are all frequency division duplex (FDD) carriers according to an embodiment of the present disclosure; and
FIG. 5 is a schematic diagram illustrating a structure of a HARQ-ACK information feedback apparatus according to an embodiment of the present disclosure.

Throughout the drawings, like reference numerals will be understood to refer to like parts, components, and structures.

## [Mode for the Invention]

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions are omitted for clarity and conciseness. The scope of the invention is defined and limited by the scope of the appended claims. In the following description, any "embodiments" referred to and not falling within the scope of the claims are merely examples useful to the understanding of the invention.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a", "an", and "the", include plural referents unless the context clearly dictates otherwise. Thus, for example, reference to "a component surface" includes reference to one or more of such surfaces.

According to the hybrid automatic repeat request-acknowledgement (HARQ-ACK) feedback mechanism defined by current long term evolution (LTE) standards, the HARQ-ACK bit sequence finally fed back by the user equipment (UE) includes HARQ-ACK bits of downlink subframes which do not contain downlink HARQ transmission. Thus, the feedback mechanism has a relatively low efficiency. If this mechanism is still utilized in the downlink carrier aggregation (CA) supporting at most 32 carriers, the downlink peak rate of the UE will be affected. In order to solve this problem, the present disclosure provides a HARQ-ACK information feedback method.

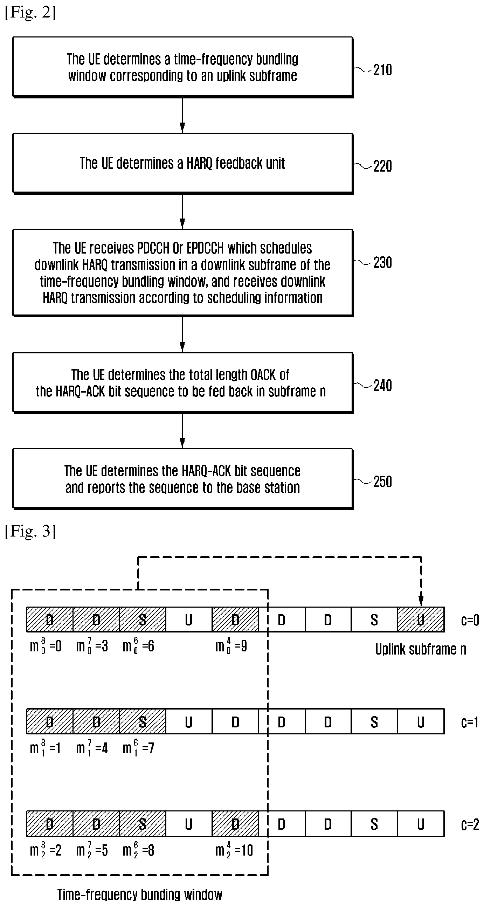

FIG. 2 is a flowchart illustrating a HARQ-ACK information feedback method according to an embodiment of the present disclosure.

Referring to FIG. 2, at operation 210, the UE determines a time-frequency bundling window corresponding to an uplink subframe n.

The time-frequency bundling window is a set formed by all downlink subframes on the carrier whose HARQ-ACK is fed back in uplink subframe n. The index c of the carrier that any downlink subframe is located in the time-frequency window satisfies $0 \leq c < Nc$, wherein the carrier index starts from 0. The subframe index is denoted by $n-k_c$, wherein $k_c \in Kc$. Kc is determined by the HARQ timing relationship adopted by the HARQ-ACK of downlink subframe fed back in uplink subframe n, i.e., if the HARQ timing relationship is frequency division duplex (FDD), Kc is {4}. If the HARQ timing relationship is a certain configuration of the time division duplex (TDD), Kc is a set corresponding to a TDD configuration as shown in Table 2. Nc denotes the total number of downlink component carriers (CCs) feeding back HARQ-ACK in uplink subframe n. All downlink subframes in the time-frequency bundling window are sorted according to a predefined rule. The UE and the enhanced node B (eNB) have the same knowledge about the sorting. In an embodiment of the present disclosure, for any downlink subframe in the time-frequency bundling window, the sorting is performed firstly according to frequency and then according to time. In particular, the index $m_{k_c}$ of each downlink subframe in the time-frequency bundling window may be determined according to the following Equation (2).

Let $k_{max}$ denote a maximum value in set K,                     Equation (2)

wherein set K is a union of sets $K0, K1 ... K_{Nc}$;

let $m_{k_c} = 0$

let $i = k_{max}$

let $j = 0$

while $i \geq k_c$

while $j < Nc$

if subframe with index n-i on carrier j is a downlink subframe, and the HARQ-ACK bit of this subframe is fed back in uplink subframe n

$$m_{k_c} = m_{k_c+1}$$

else

$$m_{k_c} = m_{k_c}$$

end if

j=j+1;

end while

i=i-1;

end while

FIG. 3 is a schematic diagram illustrating a time-frequency bundling window according to an embodiment of the present disclosure.

FIG. 3 shows an example of the time-frequency bundling window obtained based on the above manner. In this example, Nc=3, and K={4, 6, 7, 8}.

Alternatively, the index $m_{k_c}$ of the downlink subframe in the time-frequency bundling window may be determined according to a following Equation (3):

Let $k_{max}$ denotes a maximum value in set K,                    Equation (3)

wherein set K is a union of sets K0,K1...$K_{Nc}$;

let $m_{k_c}$=0

let i=$k_{max}$

let j=0

while j<Nc

while i≥$k_c$

if subframe with index n-i on carrier j is a downlink subframe, and the HARQ-ACK bit of this subframe is fed back in uplink subframe n

$$m_{k_c} = m_{k_c+1}$$

else

$$m_{k_c} = m_{k_c}$$

end if

i=i-1;

end while

j=j+1;

end while

At operation 220, the UE determines a HARQ feedback unit.

The HARQ feedback unit refers to an entity corresponding to each HARQ-ACK bit fed back by the UE. In an embodiment of the present disclosure, the HARQ feedback unit may be a transmission block (TB) or downlink subframe. In particular, if the HARQ feedback unit is TBs, the HARQ-ACK bit of each TB corresponds to one bit in the feedback bit sequence. For a downlink subframe having downlink HARQ transmission on a carrier with the transmission mode of one TB, the bit corresponds to one bit in the feedback bit sequence. For a subframe having downlink HARQ transmission on the carrier with transmission mode of two TBs, the bit corresponds to two bits in the above feedback bit sequence.

If the HARQ feedback unit is downlink subframes, one HARQ-ACK bit is generated for each downlink frame having downlink HARQ transmission and mapped to the feedback bit sequence (hereinafter referred to as a HARQ-ACK bit of the subframe). If the transmission mode of the downlink subframe is one TB, the bit is a HARQ-ACK bit corresponding to the TB transmitted in the subframe. If the transmission mode of the downlink subframe is two TBs, the bit corresponds to a spatial bundling result of two HARQ-ACK bits corresponding to the two TBs transmitted in the subframe.

The UE determines the type of the HARQ feedback unit through receiving signaling from the eNB. The signaling includes at least one of a broadcast message, radio resource control (RRC) signaling, media access control (MAC) signaling, or physical layer signaling.

At operation 230, the UE receives downlink grant (DL-GRANT) scheduling downlink HARQ transmission in a downlink subframe of the time-frequency bundling window, and receives downlink HARQ transmission according to scheduling information.

If the UE detects the DL-GRANT in a certain downlink subframe within the time-frequency bundling window, the UE obtains the downlink (DL) DL assignment index (DL DAI) in the DL-GRANT, wherein the DL DAI field includes d bits. The value of d may be defined by standard and may be zero. In an embodiment of the present disclosure, the DL DAI in the DL-GRANT scheduling downlink HARQ transmission may have two types, a time-domain DL DAI, and a combined DAI. The type of the DL DAI is determined by standard. For example, the DL DAI in all DL-GRANTs scheduling the downlink HARQ transmission transmitted on the primary carrier is type 1, and the others are type 2. In an embodiment of the present disclosure, the DL DAI in the DL-GRANT scheduling the downlink HARQ transmission transmitted in the common physical downlink control channel (PDCCH) search space is type 1, and the others are type 2. In an embodiment of the present disclosure, the DL DAI in all DL-GRANTs scheduling the downlink HARQ transmission is type 2. For the DL DAI in the downlink subframe $m_{k_c}$ within the bundling window, it is mapped to a certain integer according to a predefined mapping rule to obtain a mapping value $DAI_{k_c}$ of the DL DAI. The value of $DAI_{k_c}$ is unique among all DL DAIs of the same type within the time-frequency bundling window. The predefined rule is defined by standard.

For the DAI of type 1, $DAI_{k_c}$ denotes how many subframes, from the first downlink subframe in the time-frequency bundling window to the downlink subframe where the DL-GRANT is located, are scheduled by the DL-GRANT containing the DL DAI of type 1, i.e., $DAI_{k_c}$ denotes the number of downlink subframes being scheduled by the DL-GRANT containing the DL DAI of type 1, from the first downlink subframe of the time-frequency bundling window to the downlink subframe where the DL-GRANT is located.

For the DAI of type 2, if the feedback unit is TBs, $DAI_{k_c}$ denotes how many TBs, from the first downlink subframe in the time-frequency bundling window to the downlink subframe where the DL-GRANT is located, are scheduled by the DL-GRANT containing the DL DAI of type 2, i.e., $DAI_{k_c}$ denotes the number of TBs being scheduled by the DL-GRANT containing the DL DAI of type 2, from the first downlink subframe of the time-frequency bundling window to the downlink subframe where the DL-GRANT is located. If the feedback unit is downlink subframes, $DAI_{k_c}$ denotes how many downlink subframes, from the first downlink subframe in the time-frequency bundling window to the downlink subframe where the DL-GRANT is located, are scheduled by the DL-GRANT containing the DL DAI of type 2, i.e., $DAI_{k_c}$ denotes the number of downlink subframes being scheduled by the DL-GRANT containing the DL DAI of type 2, from the first downlink subframe of the time-frequency bundling window to the downlink subframe where the DL-GRANT is located. After the number of feedback units being scheduled is determined according to , corresponding downlink receiving may be performed and the corresponding HARQ-ACK information, i.e. ACK or negative ACK (NACK) may be determined.

At operation 240, the UE determines a total length $O_{ACK}$ of a feedback bit sequence to be fed back in an uplink subframe n.

The value of $O_{ACK}$ is not larger than the total number of feedback units contained in the time-frequency bundling window. The value $O_{ACK}$ may be dynamically indicated by physical layer signaling, e.g., indicated via UL DAI. In an embodiment of the present disclosure, the value $O_{ACK}$ may be indicated by adding an additional bit to the DL-GRANT or using a redundant bit in the DL-GRANT. In particular, in the DL-GRANT transmitted in each subframe, the total number of feedback units scheduled on all carriers adopting the DL-GRANT containing the same type of DL DAI in the subframe is indicated by the bit. In an example where the value of the bit in the last (with respect to time) DL-GRANT containing the DL DAI of the corresponding type received by the UE in the time-frequency bundling window is T, the subframe where the DL-GRANT is located is N. The UE determines that the value of $O_{ACK}$ is $T+DAI_{N0}-1$. $DAI_{N0}$ denotes the DL DAI value corresponding to the first feedback unit being scheduled in subframe N. In an embodiment of the present disclosure, $DAI_{N0}$ is indicated semi-statically or statically by the eNB via higher layer signaling, or determined by the UE according to the HARQ feedback unit actually received within the time-frequency bundling window. In particular, the UE determines the format of the feedback channel (i.e., the physical uplink control channel (PUCCH) or the physical uplink shared channel (PUSCH)) according to the number of HARQ feedback units actually received within the time-frequency bundling window and other information that needs to be fed back (including periodic channel state information (CSI) and scheduling request (SR), etc.). The $O_{ACK}$ may be determined by subtracting the number of bits of other information to be fed back from the capacity of the channel capacity.

At operation 250, the UE determines the feedback bit sequence and reports the sequence to the base station.

In an example where the feedback bit sequence is $O_0 O_1,...,O_{O_{ACK}-1}$, if the feedback unit is TBs, and the downlink HARQ transmission mode in downlink subframe $m_{k_c}$ is one TB, the HARQ-ACK bit of this TB corresponds to $O\,DAI_{kc+\Delta}$. If the transmission mode of the downlink HARQ transmission in subframe $m_{k_c}$ is two TBs, the HARQ-ACK bit of the first TB corresponds to $O\,DAI_{k_c-1+\Delta}$, and the HARQ-ACK bit of the second TB corresponds to $O\,DAI_{k_c+\Delta}$. If the feedback unit is subframes, the HARQ-ACK bit of downlink subframe $m_{k_c}$ which has downlink HARQ transmission within the time-frequency bundling window corresponds to $O\,DAI_{k_c+\Delta}$.

In an example where the feedback bit sequence is $O_0 O_1,...,O_{O_{ACK}-1}$, then, for the downlink HARQ transmission scheduled by the DL-GRANT containing DL DAI of type 2, if the feedback unit is TBs and the downlink HARQ transmission mode in downlink subframe $m_{k_c}$ is one TB, the HARQ-ACK bit of this TB corresponds to $O\,DAI_{k_c+\Delta}$. If the transmission mode of the downlink HARQ transmission in subframe $m_{k_c}$ is two TBs, the HARQ-ACK bit of the first TB corresponds to $O\,DAI_{k_c-1+\Delta}$, and the HARQ-ACK bit of the second TB corresponds to $O\,DAI_{k_c+\Delta}$. If the feedback unit is subframes, the HARQ-ACK bit of downlink subframe $m_{k_c}$ which has downlink HARQ transmission within the time-frequency bundling window corresponds to $O\,DAI_{k_c+\Delta}$.

For the downlink HARQ transmission scheduled by the DL-GRANT containing DL DAI of type 1, the HARQ-ACK bit (if the HARQ feedback unit is TBs) of the TB in the downlink subframe whose HARQ-ACK is fed back in the uplink subframe n on the carrier or the HARQ-ACK bit (if the HARQ feedback unit is downlink subframes) of the downlink subframe may be mapped to a predefined position of the feedback bit sequence. In an embodiment, the HARQ-ACK bit may be mapped to a start point of the feedback bit sequence, mapped to a position behind the HARQ-ACK bit corresponding to semi-persistent scheduling (SPS) transmission, mapped to the end of the HARQ-ACK bit sequence corresponding to the HARQ feedback unit in the time-frequency bundling window, or mapped to a position in front of the HARQ-ACK bit corresponding to the SPS transmission.

If there is SPS downlink transmission in the time-frequency bundling window, the HARQ-ACK bit corresponding to the SPS downlink transmission is mapped to a predefined position of the feedback bit sequence. In one embodiment, according to the index of the downlink subframe where the SPS transmission is located in the time-frequency bundling window, the HARQ-ACK bit corresponding to the SPS transmission may be mapped to the beginning of the feedback bit sequence according to an ascending order of the indexes, or mapped to a position in front of the HARQ-ACK bit corresponding to the downlink HARQ transmission scheduled by the DL-GRANT containing DL DAI of type 1. In an embodiment of the present disclosure, according to the index of the downlink subframe where the SPS transmission is located in the time-frequency bundling window, the HARQ-ACK bit corresponding to the SPS transmission may be mapped to the end of the feedback bit sequence according to a descending order of the indexes, or mapped to a position in front of the HARQ-ACK bit corresponding to the downlink HARQ transmission scheduled by the DL-GRANT containing DL DAI of type 1.

If there is a HARQ-ACK bit corresponding to other types of HARQ transmission in front of the HARQ-ACK bit corresponding to the downlink HARQ transmission scheduled by the DL-GRANT containing the DL DAI of type 2, e.g., there is a HARQ-ACK bit corresponding to the downlink HARQ transmission scheduled by the DL-GRANT containing DL DAI of type 1 or the HARQ-ACK bit corresponding to SPS downlink transmission, the value of $\Delta$ equals the total number of HARQ-ACK bits corresponding to the other type downlink HARQ transmission; otherwise, the value of $\Delta$ is 0.

In the feedback bit sequence, if a bit does not correspond to any HARQ feedback unit, the value of the bit is configured as NACK, i.e., configured as 0. Embodiments of the present disclosure do not restrict the time sequence that the UE executes the above operations. Any modifications or adjustments to the execution sequence of one or more of the above operations may be provided in one or more embodiments of the present disclosure.

In order to facilitate understanding by way of example, technical solutions of the present disclosure may be described with reference to interactions of devices in detailed application scenarios.

Embodiment 1

In this embodiment of the present disclosure, all downlink CCs of the UE are FDD downlink carriers, i.e., the UE feeds back HARQ-ACK of downlink CCs according to FDD downlink HARQ timing relationship. According to signaling indications of the eNB, the feedback unit during the HARQ-ACK feedback procedure of the UE is TBs. In addition, the number of bits in the DL DAI field is 3. The UE determines the total number of feedback units through receiving physical layer signaling from the eNB before determining the feedback bit sequence. There is no SPS transmission in the time-frequency bundling window. The detailed operations based thereon are as follows.

At operation 1, the UE determines the time-frequency bundling window corresponding to an uplink subframe n.

In this embodiment, K={4}. The time-frequency bundling window denotes a set that consists of downlink subframes with index n-4 on all downlink CCs whose HARQ-ACK is fed back in an uplink subframe n. The index $m_{k_c}$ of the downlink subframe in the time-frequency bundling window denotes the index of the carrier where the corresponding downlink subframe is located. Herein, the index of the carrier refers to an index of the carrier after the indexes of all downlink CCs whose HARQ-ACK is fed back in an uplink subframe n are sorted according to an ascending order or a descending order. The index of the carrier starts from 0.

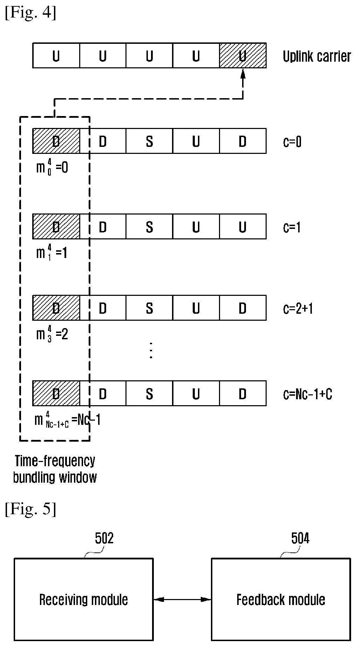

FIG. 4 is a schematic diagram illustrating a time-frequency bundling window in a case where downlink CCs of the UE are all FDD carriers according to an embodiment of the present disclosure.

Referring to FIG. 4, since the range of the index of the carrier may be larger than the number of the CCs of the UE, the carrier index configured by the UE may be inconsistent with the order of the carrier. Therefore, the index of the (Nc-1)th carrier is denoted by Nc-1+C in the drawings.

At operation 2, the UE receives the DL-GRANT scheduling the downlink HARQ transmission in a downlink subframe of the time-frequency bundling window, and receives the downlink HARQ transmission according to scheduling information.

If the UE detects the DL-GRANT in a certain downlink subframe in the time-frequency bundling window, the UE obtains the status of the DL DAI field in the DL-GRANT. In this embodiment, the DL DAI field includes 3 bits. Without loss generality, the mapping relationship between the status of the DL DAI field and the $DAI_{k_c}$ in this embodiment is as shown in Table 4. In this embodiment, $DAI_{k_c}$ denotes how many TBs are scheduled from the first downlink subframe of the time-frequency bundling window to the downlink subframe where the DL-GRANT is located.

[Table 4]

| Mapping relationship from DL DAI field to $DAI_k$ | |
| --- | --- |
| DL DAI MSB, LSB | $DAI_k$ |
| 0, 0, 0 | 1 or 9 or 17 or ⋯ |
| 0, 0, 1 | 2 or 10 or 18 or ⋯ |
| 0, 1, 0 | 3 or 11 or 19 or ... |
| 0, 1, 1 | 4 or 12 or 20 or ... |
| 1, 0, 0 | 5 or 13 or 21 or... |
| 1, 0, 1 | 6 or 14 or 22 or... |
| 1, 1, 0 | 7 or 15 or 23 or... |
| 1, 1, 1 | 0 or 8 or 16 or... |

At operation 3, the UE determines the total length $O_{ACK}$ of the feedback bit sequence to be fed back in an uplink subframe n.

Before sending an uplink subframe n, the UE receives physical layer signaling from the eNB and determines the value of the $O_{ACK}$.

At operation 4, the UE determines the feedback bit sequence and reports the feedback bit sequence to the base station.

In an example where the feedback bit sequence is $O_0 O_1,...,O_{O_{ACK}-1}$, , if the transmission mode of the downlink HARQ transmission transmitted in downlink subframe $m_{k_c}$ in time-frequency bundling window is one TB, the HARQ-ACK bit of the TB corresponds to $O_{DAI_{k_c}}$. If the transmission mode of the downlink HARQ transmission transmitted in downlink subframe in the time-frequency bundling window is two TBs, the HARQ-ACK bit of the first TB corresponds to $O_{DAI_{k_c}-1}$, and the HARQ-ACK bit of the second TB corresponds to $O_{DAI_{k_c}}$.

In the feedback bit sequence, if a bit does not correspond to any feedback unit, the value of the bit is configured to be NACK, i.e., 0.

Embodiment 2

In this embodiment, all downlink CCs of the UE are TDD carriers. The UE feeds back HARQ-ACK of all downlink CCs according to the HARQ timing relationship of TDD uplink-downlink configuration 2 of Table 2. According to the signaling indication of the eNB, the UE determines that the feedback unit during the HARQ-ACK feedback procedure is TB. In addition, the number of bits of the DL DAI field is 3. The UE determines the total number of feedback units through receiving the physical layer signaling of the eNB before determining the feedback bit sequence. There is no SPS scheduling in the time-frequency bundling window. The detailed operations based thereon are as follows.

At operation 1, the UE determines a time-frequency bundling window of an uplink subframe n.

In this embodiment, K={8, 7, 6, 4}. The time-frequency bundling window is a set that consists of downlink subframes with indexes n-4 on all downlink CCs whose HARQ-ACK is fed back in uplink subframe n, wherein kÅK. The index $m_{k_c}$ of the downlink subframe in the time-frequency window is determined according to the manner in operation 210 of FIG. 2.

At operation 2, the UE receives DL-GRANT scheduling downlink HARQ transmission in a downlink subframe in the time-frequency bundling window, and receives the downlink HARQ transmission according to scheduling information.

If the UE detects the DL-GRANT in a certain downlink subframe in the time-frequency bundling window, the UE obtains the status of the DL DAI field in the DL-GRANT. In this embodiment, the DL DAI field includes 3 bits. Without loss generality, the mapping relationship between the status of the DL DAI field and the in this embodiment is as shown in Table 4. In this embodiment, $DAI_{k_c}$ denotes how many TBs are scheduled from the first downlink subframe of the time-frequency bundling window to the downlink subframe where the DL-GRANT is located.

At operation 3, the UE determines the total length $O_{ACK}$ of the feedback bit sequence to be fed back in an uplink subframe n.

Before sending an uplink subframe n, the UE receives physical layer signaling from the eNB and determines the value of the $O_{ACK}$.

At operation 4, the UE determines the feedback bit sequence and reports the feedback bit sequence to the base station.

In an example where the feedback bit sequence is $O_0 O_1,...,O_{O_{ACK}-1}$, if the transmission mode of the downlink HARQ transmission transmitted in downlink subframe $m_{k_c}$ in time-frequency bundling window is one TB, the HARQ-ACK bit of the TB corresponds to $O_{DAI_{k_c}}$, if the transmission mode of the downlink HARQ transmission transmitted in downlink subframe $m_{k_c}$ in the time-frequency bundling window is two TBs, the HARQ-ACK bit of the first TB corresponds to $O_{DAI_{k_c}-1}$, and the HARQ-ACK bit of the second TB corresponds to $O_{DAI_{k_c}}$.

In the feedback bit sequence, if a bit does not correspond to any feedback unit, the value of the bit is configured to be NACK, i.e., 0.

Embodiment 3

In this embodiment, the downlink CCs of the UE include both FDD downlink carriers and TDD carriers. The carrier where the uplink subframe in which the HARQ-ACK is fed back is located is an FDD carrier. The UE feeds back the HARQ-ACK of the downlink CC according to the FDD timing relationship. According to the signaling indication of the eNB, the UE determines that the feedback unit during the HARQ-ACK feedback procedure is downlink subframes. In addition, the number of bits of the DL DAI field is 3. The UE determines the total number $O_{ACK}$ of feedback units according to the RRC signaling of the eNB, i.e., $O_{ACK}$ is a semi-statically configured value, and $O_{ACK}$ is not larger than the number of downlink subframes in the time-frequency bundling window. There is no SPS scheduling in the time-frequency bundling window. The detailed operations based thereon are as follows.

At operation 1, the UE determines the time-frequency bundling window of an uplink subframe n.

In this embodiment, K={4}. The time-frequency bundling window is a set of downlink subframes with indexes n-4 on all downlink CCs whose HARQ-ACK is fed back in an uplink subframe n. The index $m_{k_c}$ of the downlink subframe in the time-frequency window is determined according to the manner in operation 210 of FIG. 2.

At operation 2, the UE receives DL-GRANT scheduling downlink HARQ transmission in a downlink subframe in the time-frequency bundling window, and receives the downlink HARQ transmission according to scheduling information.

If the UE detects the DL-GRANT in a certain downlink subframe in the time-frequency bundling window, the UE obtains the status of the DL DAI field in the DL-GRANT. In this embodiment, the DL DAI field includes 3 bits. Without loss generality, the mapping relationship between the status of the DL DAI field and the $DAI_{k_c}$ in this embodiment is as shown in Table 4. In this embodiment, $DAI_{k_c}$ denotes how many downlink subframes are scheduled from the first downlink subframe of the time-frequency bundling window to the downlink subframe where the DL-GRANT is located.

At operation 3, the UE determines the total length $O_{ACK}$ of the feedback bit sequence to be fed back in uplink subframe n.

In an example where the feedback bit sequence is $O_0 O_1,...,O_{O_{ACK}-1}$, the HARQ-ACK bit of the downlink subframe $m_{k_c}$ having downlink HARQ transmission in the time-frequency bundling window corresponds to $O_{DAI_{k_c}}$. In the feedback bit sequence, if a bit does not correspond to any feedback unit, the value of the bit is configured to be NACK, i.e., 0.

FIG. 5 is a schematic diagram illustrating a structure of a HARQ-ACK information feedback apparatus according to an embodiment of the present disclosure.

Referring to FIG. 5, in accordance with the above method, the present disclosure further provides an apparatus. The apparatus includes a receiving module 502 and a feedback module 504, wherein the receiving module 502 is adapted to receive DL-GRANT scheduling downlink HARQ transmission in a time-frequency bundling window corresponding to an uplink subframe in which HARQ-ACK is fed back, obtain DL DAI in the DL-GRANT, and determine a mapping value of each DL DAI. The feedback module 504 is adapted to map a HARQ-ACK bit of each HARQ feedback unit to a corresponding bit of a feedback bit sequence according to the mapping value of the DL DAI.

Those skilled in the art will recognize that all or some operations of the various embodiments of the present disclosure may be implemented by one or more programs running on relevant hardware. The program may be stored in a computer readable storage medium. When the program is executed, one or more operations and/or features of the various embodiments of the method may be implemented.

In addition, the functional units of each embodiment of the present disclosure may be integrated into one or more processing modules, or may be independently configured. In an embodiment of the present disclosure, two or more units may be integrated into one module. The above integrated module may be implemented by hardware or by software functional modules. In a case where the integrated module is implemented in the form of software functional modules and is sold or used as an independent product, it may be stored in a computer readable storage medium.

The above-mentioned storage medium may be read-only memory, disk or compact disc, etc.

While the present disclosure has been shown and described with reference to various embodiments thereof, it will be understood by those skilled in the art that various changes in form and detail may be made therein without departing from the scope of the present disclosure as defined by the appended claims.

## Claims

1. A method for feeding back hybrid automatic repeat request-acknowledgement, HARQ-ACK, information by a user equipment, UE, being configured for a plurality of downlink component carriers, CC, the method comprising:

   receiving, from a base station, downlink control information, DCI, including a downlink assignment indicator, DAI, on a physical downlink control channel, PDCCH, or enhanced PDCCH, ePDCCH, wherein the DAI specifies a number of downlink subframes that have downlink HARQ transmission in a bundling window by indicating a number of scheduled downlink subframes from a first downlink subframe to a current downlink subframe in the bundling window;
   receiving, from the base station, data on a physical downlink shared channel, PDSCH, in the bundling window;
   generating the HARQ-ACK information for the data based on the DAI, wherein each of the downlink subframes in the bundling window is indexed firstly according to frequency and then according to time; and
   transmitting the HARQ-ACK information to the base station on a physical uplink control channel, PUCCH, wherein the downlink subframes in the bundling window are indexed first in increasing order of a frequency index and then in increasing order of a subframe index.

2. The method of claim 1, wherein the bundling window comprises downlink subframes corresponding to an uplink subframe, and the HARQ-ACK information is fed back in the uplink subframe.

3.    The method of claim 1, the method further comprising:

identifying the DAI; and
mapping a HARQ-ACK bit of a HARQ feedback unit to a bit of a feedback bit sequence according to the identified DAI.

4.    The method of claim 3, wherein the HARQ feedback unit is a downlink subframe.

5.    A method for receiving hybrid automatic repeat request-acknowledgement, HARQ-ACK, information by a base station, the method comprising:

transmitting, to a user equipment, UE, being configured for a plurality of downlink component carriers, CC, downlink control information, DCI, including a downlink assignment indicator, DAI, on a physical downlink control channel, PDCCH, or enhanced PDCCH, ePDCCH, wherein the DAI specifies a number of downlink subframes that have downlink HARQ transmission in a bundling window by indicating a number of scheduled downlink subframes from a first downlink subframe to a current downlink subframe in the bundling window;
transmitting, to the UE, data on a physical downlink shared channel, PDSCH, in the bundling window; and
receiving, from the UE, the HARQ-ACK information for the data on a physical uplink control channel, PUCCH, wherein the HARQ-ACK information for the data is generated by the UE based on the DAI, wherein each of the downlink subframes in the bundling window is indexed firstly according to frequency and then according to time, wherein the downlink subframes in the bundling window are indexed first in increasing order of a frequency index and then in increasing order of a subframe index.

6.    The method of claim 5, wherein the bundling window comprises downlink subframes corresponding to an uplink subframe, and the HARQ-ACK information is fed back in the uplink subframe.

7.    A user equipment, UE, for feeding back hybrid automatic repeat request-acknowledgement, HARQ-ACK, information by a user equipment, UE, the UE is configured for a plurality of downlink component carriers, CC, and to:

receive, from a base station, downlink control information, DCI, including a downlink assignment indicator, DAI, on a physical downlink control channel, PDCCH, or enhanced PDCCH, ePDCCH, wherein the DAI specifies a number of downlink subframes that have downlink HARQ transmission in a bundling window by indicating a number of scheduled downlink subframes from a first downlink subframe to a current downlink subframe in the bundling window;
receive, from the base station, data on a physical downlink shared channel, PDSCH, in the bundling window;
generate the HARQ-ACK information for the data based on the DAI, wherein each of the downlink subframes in the bundling window is indexed firstly according to frequency and then according to time; and
transmit, to the base station, the HARQ-ACK information on a physical uplink control channel, PUCCH, wherein the downlink subframes in the bundling window are indexed first in increasing order of a frequency index and then in increasing order of a subframe index.

8.    The UE of claim 7, wherein the bundling window comprises downlink subframes corresponding to an uplink subframe, and the HARQ-ACK information is fed back in the uplink subframe.

9.    The UE of claim 7, the UE is further configured to:

identify the DAI; and
map a HARQ-ACK bit of a HARQ feedback unit to a bit of a feedback bit sequence according to the identified DAI.

10.    The UE of claim 8, wherein the HARQ feedback unit is a downlink subframe.

11.    A base station for receiving hybrid automatic repeat request-acknowledgement (HARQ-ACK) information, the base station is configured to:

transmit, to a user equipment, UE, configured for a plurality of downlink component carriers, CC, downlink control information, DCI, including a downlink assignment indicator, DAI on a physical downlink control channel, PDCCH, or enhanced PDCCH,ePDCCH, wherein the DAI specifies with a number of downlink subframes that have downlink HARQ transmission in a bundling window by indicating a number of scheduled downlink subframes from a first downlink subframe to a current downlink subframe in the bundling window;
transmit, to the UE, data on a physical downlink shared channel, PDSCH, in the bundling window; and
receive, from the UE, a feedback bit sequence of the HARQ-ACK for the data information on a physical uplink control channel, PUCCH,
wherein the HARQ-ACK information for the data is generated by the UE based on the DAI, wherein each of the downlink subframes in the bundling window is indexed firstly according to frequency of the respective component carrier and then according to time of the respective subframe,
wherein the downlink subframes in the bundling window are indexed first in increasing order of a frequency index and then in increasing order of a subframe index.

12. The base station of claim 10, wherein the bundling window comprises downlink subframes corresponding to an uplink subframe, and the HARQ-ACK information is fed back in the uplink subframe.

**Patentansprüche**

1. Verfahren zum Rückmelden von Hybride-Automatische-Wiederholungsanforderungs-Bestätigungs-Informationen, HARQ-ACK-Informationen, durch eine Benutzereinrichtung, UE, die für eine Mehrzahl von Downlink-Komponententrägern, Downlink-CC, konfiguriert ist, das Verfahren umfassend:

   Empfangen, von einer Basisstation, von Downlink-Steuerinformationen, DCI, enthaltend einen Downlink-Zuweisungsindikator, DAI, auf einem Physischen Downlink-Steuerkanal, PDCCH, oder einem Verbesserten PDCCH, ePDCCH, wobei der DAI eine Anzahl von Downlink-Unterrahmen spezifiziert, die eine Downlink-HARQ-Übertragung in einem Bündelungsfenster aufweisen, indem er eine Anzahl von zeitgeplanten Downlink-Unterrahmen von einem ersten Downlink-Unterrahmen bis zu einem aktuellen Downlink-Unterrahmen in dem Bündelungsfenster angibt;
   Empfangen, von der Basisstation, von Daten auf einem Gemeinsamen Physischen Downlink-Kanal, PDSCH, in dem Bündelungsfenster;
   Erzeugen der HARQ-ACK-Informationen für die Daten auf der Grundlage des DAI, wobei jeder der Downlink-Unterrahmen in dem Bündelungsfenster zuerst entsprechend der Frequenz und dann entsprechend der Zeit indiziert wird; und
   Senden der HARQ-ACK-Informationen an die Basisstation auf einem Physischen Uplink-Steuerkanal, PUCCH, wobei die Downlink-Unterrahmen in dem Bündelungsfenster zuerst in aufsteigender Reihenfolge eines Frequenzindex und dann in aufsteigender Reihenfolge eines Unterrahmenindex indiziert werden.

2. Verfahren nach Anspruch 1, wobei das Bündelungsfenster Downlink-Unterrahmen umfasst, die einem Uplink-Unterrahmen entsprechen, und die HARQ-ACK-Informationen in dem Uplink-Unterrahmen rückgemeldet werden.

3. Verfahren nach Anspruch 1, welches zusätzlich umfasst:

   Identifizieren des DAI; und
   Zuordnen eines HARQ-ACK-Bits einer HARQ-Rückmeldungseinheit zu einem Bit einer Rückmeldungsbitsequenz auf der Grundlage des identifizierten DAI.

4. Verfahren nach Anspruch 3, wobei die HARQ-Rückmeldungseinheit ein Downlink-Unterrahmen ist.

5. Verfahren zum Empfangen von Hybride-Automatische-Wiederholungsanforderungs-Bestätigungs-Informationen, HARQ-ACK-Informationen, durch eine Basisstation, das Verfahren umfassend:

   Senden, an eine Benutzereinrichtung, UE, die für eine Mehrzahl von Downlink-Komponententrägern, Downlink-CC, konfiguriert ist, von Downlink-Steuerinformationen, DCI, enthaltend einen Downlink-Zuweisungsindikator, DAI, auf einem Physischen Downlink-Steuerkanal, PDCCH, oder einem Verbesserten PDCCH, ePDCCH, wobei der DAI eine Anzahl von Downlink-Unterrahmen spezifiziert, die eine Downlink-HARQ-Übertragung in einem Bündelungsfenster aufweisen, indem er eine Anzahl von zeitgeplanten Downlink-Unterrahmen von einem ersten Downlink-Unterrahmen bis zu einem aktuellen Downlink-Unterrahmen in dem Bündelungsfenster angibt;
   Senden, an die UE, von Daten auf einem Gemeinsamen Physischen Downlink-Kanal, PDSCH, in dem Bündelungsfenster; und
   Empfangen, von der UE, der HARQ-ACK-Informationen für die Daten auf einem Physischen Uplink-Steuerkanal, PUCCH,

wobei die HARQ-ACK-Informationen für die Daten durch die UE auf der Grundlage des DAI erzeugt werden, wobei jeder der Downlink-Unterrahmen in dem Bündelungsfenster zuerst entsprechend der Frequenz und dann entsprechend der Zeit indiziert wird,

wobei die Downlink-Unterrahmen in dem Bündelungsfenster zuerst in aufsteigender Reihenfolge eines Frequenzindex und dann in aufsteigender Reihenfolge eines Unterrahmenindex indiziert werden.

6. Verfahren nach Anspruch 5, wobei das Bündelungsfenster Downlink-Unterrahmen umfasst, die einem Uplink-Unterrahmen entsprechen, und die HARQ-ACK-Informationen in dem Uplink-Unterrahmen rückgemeldet werden.

7. Benutzereinrichtung, UE, zum Rückmelden von Hybride-Automatische-Wiederholungsanforderungs-Bestätigungs-Informationen, HARQ-ACK-Informationen, durch eine Benutzereinrichtung, UE, die UE konfiguriert für eine Mehrzahl von Downlink-Komponententrägern, Downlink-CC, und zum:

Empfangen, von einer Basisstation, von Downlink-Steuerinformationen, DCI, enthaltend einen Downlink-Zuweisungsindikator, DAI, auf einem Physischen Downlink-Steuerkanal, PDCCH, oder einem Verbesserten PDCCH, ePDCCH, wobei der DAI eine Anzahl von Downlink-Unterrahmen spezifiziert, die eine Downlink-HARQ-Übertragung in einem Bündelungsfenster aufweisen, indem er eine Anzahl von zeitgeplanten Downlink-Unterrahmen von einem ersten Downlink-Unterrahmen bis zu einem aktuellen Downlink-Unterrahmen in dem Bündelungsfenster angibt;

Empfangen, von der Basisstation, von Daten auf einem Gemeinsamen Physischen Downlink-Kanal, PDSCH, in dem Bündelungsfenster;

Erzeugen der HARQ-ACK-Informationen für die Daten auf der Grundlage des DAI, wobei jeder der Downlink-Unterrahmen in dem Bündelungsfenster zuerst entsprechend der Frequenz und dann entsprechend der Zeit indiziert wird; und

Senden, an die Basisstation, der HARQ-ACK-Informationen auf einem Physischen Uplink-Steuerkanal, PUCCH, wobei die Downlink-Unterrahmen in dem Bündelungsfenster zuerst in aufsteigender Reihenfolge eines Frequenzindex und dann in aufsteigender Reihenfolge eines Unterrahmenindex indiziert werden.

8. UE nach Anspruch 7, wobei das Bündelungsfenster Downlink-Unterrahmen umfasst, die einem Uplink-Unterrahmen entsprechen, und die HARQ-ACK-Informationen in dem Uplink-Unterrahmen rückgemeldet werden.

9. UE nach Anspruch 7, wobei die UE ferner konfiguriert ist zum:

Identifizieren des DAI; und

Zuordnen eines HARQ-ACK-Bits einer HARQ-Rückmeldungseinheit zu einem Bit einer Rückmeldungsbitsequenz auf der Grundlage des identifizierten DAI.

10. UE nach Anspruch 8, wobei die HARQ-Rückmeldungseinheit ein Downlink-Unterrahmen ist.

11. Basisstation zum Empfangen von Hybride-Automatische-Wiederholungsanforderungs-Bestätigungs-Informationen (HARQ-ACK-Informationen), die Basisstation konfiguriert zum:

Senden, an eine Benutzereinrichtung, UE, die für eine Mehrzahl von Downlink-Komponententrägern, Downlink-CC, konfiguriert ist, von Downlink-Steuerinformationen, DCI, enthaltend einen Downlink-Zuweisungsindikator, DAI, auf einem Physischen Downlink-Steuerkanal, PDCCH, oder einem Verbesserten PDCCH, ePDCCH, wobei der DAI eine Anzahl von Downlink-Unterrahmen spezifiziert, die eine Downlink-HARQ-Übertragung in einem Bündelungsfenster aufweisen, indem er eine Anzahl von zeitgeplanten Downlink-Unterrahmen von einem ersten Downlink-Unterrahmen bis zu einem aktuellen Downlink-Unterrahmen in dem Bündelungsfenster angibt;

Senden, an die UE, von Daten auf einem Gemeinsamen Physischen Downlink-Kanal, PDSCH, in dem Bündelungsfenster; und

Empfangen, von der UE, einer Rückmeldungsbitsequenz der HARQ-ACK für die Dateninformationen auf einem Physischen Uplink-Steuerkanal, PUCCH,

wobei die HARQ-ACK-Informationen für die Daten durch die UE auf der Grundlage des DAI erzeugt werden, wobei jeder der Downlink-Unterrahmen in dem Bündelungsfenster zuerst entsprechend der Frequenz des jeweiligen Komponententrägers und dann entsprechend der Zeit des jeweiligen Unterrahmens indiziert wird,

wobei die Downlink-Unterrahmen in dem Bündelungsfenster zuerst in aufsteigender Reihenfolge eines Frequenzindex und dann in aufsteigender Reihenfolge eines Unterrahmenindex indiziert werden.

**12.** Basisstation nach Anspruch 10, wobei das Bündelungsfenster Downlink-Unterrahmen umfasst, die einem Uplink-Unterrahmen entsprechen, und die HARQ-ACK-Informationen in dem Uplink-Unterrahmen rückgemeldet werden.

**Revendications**

**1.** Procédé de retour d'informations d'accusé de réception de demande de répétition automatique hybride HARQ-ACK par un équipement d'utilisateur UE, prévu pour une pluralité de porteuses composantes de liaison descendante CC, ledit procédé comprenant :

la réception d'informations de commande de liaison descendante DCI en provenance d'une station de base, comprenant un indicateur d'attribution de liaison descendante DAI, sur un canal de commande de liaison descendante physique PDCCH, ou un PDCCH amélioré ePDCCH, le DAI spécifiant un nombre de sous-trames de liaison descendante ayant une transmission HARQ en liaison descendante dans une fenêtre de groupage par indication d'un nombre de sous-trames de liaison descendante programmées, d'une première sous-trame de liaison descendante à une sous-trame de liaison descendante actuelle dans la fenêtre de groupage ;
la réception de données en provenance de la station de base sur un canal partagé de liaison descendante physique PDSCH dans la fenêtre de groupage ;
la génération des informations HARQ-ACK pour les données sur la base du DAI, chacune des sous-trames de liaison descendante dans la fenêtre de groupage étant d'abord indexée en fonction de la fréquence puis en fonction du temps ; et
la transmission des informations HARQ-ACK à la station de base sur un canal de commande de liaison montante physique PUCCH,
où les sous-trames de liaison descendante dans la fenêtre de groupage sont d'abord indexées dans l'ordre croissant d'un indice de fréquence puis dans l'ordre croissant d'un indice de sous-trame.

**2.** Procédé selon la revendication 1, où la fenêtre de groupage comprend des sous-trames de liaison descendante correspondant à une sous-trame de liaison montante, et les informations HARQ-ACK sont retournées dans la sous-trame de liaison montante.

**3.** Procédé selon la revendication 1, ledit procédé comprenant en outre :

l'identification du DAI ; et
le mappage d'un bit HARQ-ACK d'une unité de retour HARQ en un bit d'une séquence binaire de retour en fonction du DAI identifié.

**4.** Procédé selon la revendication 3, où l'unité de retour HARQ est une sous-trame de liaison descendante.

**5.** Procédé de réception d'informations d'accusé de réception de demande de répétition automatique hybride HARQ-ACK par une station de base, ledit procédé comprenant :

la transmission à un équipement d'utilisateur UE prévu pour une pluralité de porteuses composantes de liaison descendante CC, d'informations de commande de liaison descendante DCI, comprenant un indicateur d'attribution de liaison descendante DAI, sur un canal de commande de liaison descendante physique PDCCH, ou un PDCCH amélioré ePDCCH, le DAI spécifiant un nombre de sous-trames de liaison descendante ayant une transmission HARQ en liaison descendante dans une fenêtre de groupage par indication d'un nombre de sous-trames de liaison descendante programmées, d'une première sous-trame de liaison descendante à une sous-trame de liaison descendante actuelle dans la fenêtre de groupage ;
la transmission à l'UE de données sur un canal partagé de liaison descendante physique PDSCH dans la fenêtre de groupage ; et
la réception des informations HARQ-ACK en provenance de l'UE, pour les données sur un canal de commande de liaison montante physique PUCCH,
où les informations HARQ-ACK pour les données sont générées par l'UE sur la base du DAI, chacune des sous-trames de liaison descendante dans la fenêtre de groupage étant d'abord indexée en fonction de la fréquence puis en fonction du temps,
où les sous-trames de liaison descendante dans la fenêtre de groupage sont d'abord indexées dans l'ordre croissant d'un indice de fréquence puis dans l'ordre croissant d'un indice de sous-trame.

**6.** Procédé selon la revendication 5, où la fenêtre de groupage comprend des sous-trames de liaison descendante correspondant à une sous-trame de liaison montante, et les informations HARQ-ACK sont retournées dans la sous-trame de liaison montante.

**7.** Équipement d'utilisateur, UE, pour le retour d'informations d'accusé de réception de demande de répétition automatique hybride HARQ-ACK par un équipement d'utilisateur UE, ledit UE étant prévu pour une pluralité de porteuses composantes de liaison descendante CC, et pour :

recevoir des informations de commande de liaison descendante DCI en provenance de la station de base, comprenant un indicateur d'attribution de liaison descendante DAI, sur un canal de commande de liaison descendante physique PDCCH, ou un PDCCH amélioré ePDCCH, le DAI spécifiant un nombre de sous-trames de liaison descendante ayant une transmission HARQ en liaison descendante dans une fenêtre de groupage par indication d'un nombre de sous-trames de liaison descendante programmées, d'une première sous-trame de liaison descendante à une sous-trame de liaison descendante actuelle dans la fenêtre de groupage ;
recevoir des données en provenance de la station de base sur un canal partagé de liaison descendante physique PDSCH dans la fenêtre de groupage ;
générer les informations HARQ-ACK pour les données sur la base du DAI, chacune des sous-trames de liaison descendante dans la fenêtre de groupage étant d'abord indexée en fonction de la fréquence puis en fonction du temps ; et
transmettre à la station de base les informations HARQ-ACK sur un canal de commande de liaison montante physique PUCCH,
où les sous-trames de liaison descendante dans la fenêtre de groupage sont d'abord indexées dans l'ordre croissant d'un indice de fréquence puis dans l'ordre croissant d'un indice de sous-trame.

**8.** UE selon la revendication 7, où la fenêtre de groupage comprend des sous-trames de liaison descendante correspondant à une sous-trame de liaison montante, et les informations HARQ-ACK sont retournées dans la sous-trame de liaison montante.

**9.** UE selon la revendication 7, ledit UE étant en outre prévu pour :

identifier le DAI ; et
mapper un bit HARQ-ACK d'une unité de retour HARQ en un bit d'une séquence binaire de retour en fonction du DAI identifié.

**10.** UE selon la revendication 8, où l'unité de retour HARQ est une sous-trame de liaison descendante.

**11.** Station de base pour la réception d'informations d'accusé de réception de demande de répétition automatique hybride (HARQ-ACK), ladite station de base étant prévue pour :

transmettre à un équipement d'utilisateur UE prévu pour une pluralité de porteuses composantes de liaison descendante CC, des informations de commande de liaison descendante DCI comprenant un indicateur d'attribution de liaison descendante DAI sur un canal de commande de liaison descendante physique PDCCH, ou un PDCCH amélioré ePDCCH, le DAI spécifiant un nombre de sous-trames de liaison descendante ayant une transmission HARQ en liaison descendante dans une fenêtre de groupage par indication d'un nombre de sous-trames de liaison descendante programmées, d'une première sous-trame de liaison descendante à une sous-trame de liaison descendante actuelle dans la fenêtre de groupage ;
transmettre à l'UE des données sur un canal partagé de liaison descendante physique PDSCH dans la fenêtre de groupage ; et
recevoir une séquence binaire de retour de l'HARQ-ACK en provenance de l'UE, pour les informations de données sur un canal de commande de liaison montante physique, PUCCH,
où les informations HARQ-ACK pour les données sont générées par l'UE sur la base du DAI, chacune des sous-trames de liaison descendante dans la fenêtre de groupage étant d'abord indexée en fonction de la fréquence de la porteuse composante respective puis en fonction du temps de la sous-trame respective,
où les sous-trames de liaison descendante dans la fenêtre de groupage sont d'abord indexées dans l'ordre croissant d'un indice de fréquence puis dans l'ordre croissant d'un indice de sous-trame.

**12.** Station de base selon la revendication 10, où la fenêtre de groupage comprend des sous-trames de liaison descendante correspondant à une sous-trame de liaison montante, et les informations HARQ-ACK sont retournées dans la sous-trame de liaison montante.

[Fig. 1]

[Fig. 2]

```
┌─────────────────────────────────────────┐
│ The UE determines a time-frequency bundling │ ～210
│ window corresponding to an uplink subframe   │
└─────────────────────────────────────────┘
                    │
                    ▼
┌─────────────────────────────────────────┐
│      The UE determines a HARQ feedback unit   │ ～220
└─────────────────────────────────────────┘
                    │
                    ▼
┌─────────────────────────────────────────┐
│ The UE receives PDCCH Or EPDCCH which schedules │ ～230
│ downlink HARQ transmission in a downlink subframe of the │
│ time-frequency bundling window, and receives downlink │
│ HARQ transmission according to scheduling information │
└─────────────────────────────────────────┘
                    │
                    ▼
┌─────────────────────────────────────────┐
│        The UE determines the total length OACK of │ ～240
│ the HARQ-ACK bit sequence to be fed back in subframe n │
└─────────────────────────────────────────┘
                    │
                    ▼
┌─────────────────────────────────────────┐
│    The UE determines the HARQ-ACK bit sequence │ ～250
│    and reports the sequence to the base station │
└─────────────────────────────────────────┘
```

[Fig. 3]

$m_0^8 = 0$  $m_0^7 = 3$  $m_0^6 = 6$   $m_0^4 = 9$   c=0

Uplink subframe n

$m_1^8 = 1$  $m_1^7 = 4$  $m_1^6 = 7$   c=1

$m_2^8 = 2$  $m_2^7 = 5$  $m_2^6 = 8$   $m_2^4 = 10$   c=2

Time-frequency bunding window

[Fig. 4]

Time-frequency
bundling window

[Fig. 5]

**EP 3 251 260 B1**

**REFERENCES CITED IN THE DESCRIPTION**

**Patent documents cited in the description**

- EP 2451111 A2

- US 2013114575 A1